# EUROPEAN PATENT APPLICATION

(11) **EP 3 231 281 A1**
(43) Date of publication of application: **18.10.2017**
(21) Application number: 17165473.4
(22) Date of filing: 07.04.2017
(51) Int. Cl.: A01K 11/00, A01K 29/00

(54) **SYSTEM AND METHOD FOR LOCATING AN OBJECT USING A RECEIVER DEVICE**

(30) Priority: 13.04.2016 FI 20165318
(71) Applicant: IoAgrit Oy, 21410 Vanhalinna (FI)
(72) Inventor: Kangas, Arto, 20660 Littoinen (FI); Fahllund, Jan, 20660 Lieto (FI); Mäkinen, Samuli, 24100 Salo (FI); Virta, Anssi, 20740 Turku (FI); Kangas, Harri, 33410 Tampere (FI)
(74) Representative: Suominen, Kaisa Liisa

(57) **Abstract**

The present application relates to a method for locating an animal using a livestock receiver device (104) attached to the animal, comprising steps of (a) associating the livestock receiver device to an animal to define an animal identification, comprising sending a request for the livestock receiver device to read a radio frequency identification tag attached to the animal and to memorise the animal identification contained therein, wherein the livestock receiver device comprises a radio receiver (202) and (b) activating the livestock receiver device by the livestock receiver device itself, to receive a signal for a period of time tᵣ. In this step, if no signal comprising the animal identification is received during the period of time tᵣ, passivating the livestock receiver device, by the livestock receiver device itself; and if a signal comprising the animal identification is received during the period of time tᵣ, executing an action comprised in the signal, by the livestock receiver device. Furthermore, the method comprises a step (c): after a period of time tₚ, repeating the step (b), wherein the period of time tₚ is longer than the period of time tᵣ.

## Description

### TECHNICAL FIELD

The present disclosure relates generally to object location tracking, and more specifically, to a system and method for locating a movable object (e.g., an animal) using a receiver device attached to the movable object.

### BACKGROUND

Owners of livestock (e.g. cattle, horses, sheep and pigs) need to manage livestock on a large scale. Since labour availability, skill and resources are often limited, management of livestock has become increasing challenging. There is also a need for attention to individual animal health, fertility and effective heat detection, the absence of which results in reduced herd productivity and losses to the industry. There is a need for bio-surveillance during disease outbreaks, which also mandates increased attention on the status of individual animals. Hence there has been a need to identify and locate an animal from a herd.

Various simple methods like using identification marks or tags have been in use from ancient times. In last few years, in several markets such as in the US and in Europe, it has become mandatory for animals to have earmarks for identification. The owner needs to therefore keep track on each individual animal and give it a unique ID right after it is born. With the advent of technology, in the recent past, solutions such as inserting a microchip under the skin for pets, collars with a GPS, a transmitter, and a RFID based cattle earmark, are available. Typical earmarks can be read only from a short distance, due to which they are not useful for locating a specific animal from a herd.

Other solutions do last long especially under rough environmental conditions, and consume a lot of power, due to which they need to be replaced frequently. Hence the aforementioned methods of locating the animal either require the owner of the livestock to be in close proximity to the animal to discern the earmark, or consume a lot of power, due to which they require frequent replacement.

Therefore, in light of the foregoing discussion, there exists a need to overcome the aforementioned drawbacks in existing systems for locating an animal from a distance.

### SUMMARY

The present disclosure seeks to provide a method for locating an animal using a livestock receiver device attached to the animal. The method comprises the steps of: (a) associating the livestock receiver device to the animal to define an animal identification, wherein the livestock receiver device comprises a radio receiver; (b) activating the livestock receiver device by the livestock receiver device itself, to receive a signal for a period of time tᵣ, and (i) if no signal comprising the animal identification is received during the period of time tᵣ, passivating the livestock receiver device, by the livestock receiver device itself, and (ii) if a signal comprising the animal identification is received during the period of time tᵣ, executing an action comprised in the signal, by the livestock receiver device; and (c) after a period of time tp, repeating the step (b). The period of time tp is longer than the period of time tᵣ.

The present disclosure seeks to provide a system for locating an animal using a livestock receiver device attached to the animal. The system comprises a server comprising a database, a control unit, a transmitter unit, and at least two livestock receiver devices, each comprising a radio receiver, an alarm and a battery.

Embodiments of the present disclosure substantially eliminate or at least partially address the aforementioned problems in the prior art, and enable locating an animal even from a longer distance using a livestock receiver device attached to the animal, without having to replace a battery associated with the livestock receiver device frequently, as energy consumption of the device is reduced.

Additional aspects, advantages, features and objects of the present disclosure would be made apparent from the drawings and the detailed description of the illustrative embodiments construed in conjunction with the appended claims that follow.

It will be appreciated that features of the present disclosure are susceptible to being combined in various combinations without departing from the scope of the present disclosure as defined by the appended claims.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those in the art will understand that the drawings are not to scale. Wherever possible, like elements have been indicated by identical numbers.

Embodiments of the present disclosure will now be described, by way of example only, with reference to the following diagrams wherein:
FIG. 1A is a schematic illustration of a transmitter unit activated by a server to transmit activation signals to one or more livestock receiver devices for locating one or more animals based on a selection of the animals from a control unit, in accordance with an embodiment of the present disclosure;
FIG. 1B is an exemplary tabular view of a database in the server of FIG. 1A that illustrates storage of animal identification related to a plurality of animals, in accordance with an embodiment of the present disclosure;
FIG. 2 is an exploded view of the one or more livestock receiver devices of FIG. 1A, in accordance with an embodiment of the present disclosure;
FIG. 3A is an exemplary user interface view of the control unit of FIG. 1A that illustrates selecting an animal ID from a list of animal IDs to locate an animal that corresponds the animal ID, in accordance with an embodiment of the present disclosure;
FIG. 3B is an exemplary view of the one or more livestock receiver devices of FIG. 1A attached to a plurality of animals in a livestock shed, used to locate one or more of the plurality of animals using a control unit and a transmitter unit, in accordance with an embodiment of the present disclosure;
FIG. 4 is a flow diagram that illustrates a method for locating an animal using the livestock receiver device of FIG. 1A, in accordance with an embodiment of the present disclosure;
FIG. 5 is an exploded view of the control unit of FIG. 1A, in accordance with an embodiment of the present disclosure; and
FIG. 6 illustrates a schematic diagram of computer architecture used to implement the server or the control unit of FIG. 1A, in accordance with an embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

In one aspect, a method for locating an animal using a livestock receiver device attached to the animal is provided. The method comprises the steps of: (a) associating the livestock receiver device to the animal to define an animal identification, wherein the livestock receiver device comprises a radio receiver; (b) activating the livestock receiver device by the livestock receiver device itself, to receive a signal for a period of time tᵣ, and (i) if no signal comprising the animal identification is received during the period of time tᵣ, passivating the livestock receiver device, by the livestock receiver device itself, and (ii) if a signal comprising the animal identification is received during the period of time tᵣ, executing an action comprised in the signal, by the livestock receiver device; and (c) after a period of time tp, repeating the step (b). The period of time tp is longer than the period of time tᵣ.

The step of associating the livestock receiver device to the animal comprises sending a request for the livestock receiver device to read a radio frequency identification tag attached to the animal and to memorise the animal identification contained therein.

According to one embodiment, the period time tᵣ ranges between 1 to 50 milliseconds.

According to another embodiment, the period time tp ranges between 2 to 30 seconds.

According to another embodiment, the action to be activated comprises at least one of activating an illuminator, activating a sound source, and activating a sensor including reading a measurement and sending the measurement data.

In another aspect, a system for locating an animal using a livestock receiver device attached to the animal is provided. The system comprises a server comprising a database, a control unit, a transmitter unit, and at least two livestock receiver devices, each comprising a radio receiver, an alarm and a battery.

At least one of the livestock receiver device comprises a sensor, a radio frequency identification reader and a radio transmitter.

According to one embodiment, the alarm is an illuminator or a speaker.

According to another embodiment, the illuminator comprises a light source and a light guide configured as a lens.

According to another embodiment, the livestock receiver device is a collar or an ear tag.

In an embodiment, the server includes a database that stores animal identification (animal ID) related to one or more animals.

According to another embodiment, the control unit is integrated with a user interface that provides an option to a user (e.g., a cowboy) to select an animal ID from a list of animal IDs to locate an animal. The control unit may transmit the animal ID that is selected to the server. The server may activate the transmitter unit to send an activation signal for the selected animal ID. The transmitter unit may transmit the activation signal that includes the animal ID of an animal to be located. In one embodiment, the livestock receiver device is communicatively coupled to the transmitter unit. The livestock receiver device may be attached to the animal.

According to one embodiment, the livestock receiver device receives the activation signal and reads an animal ID from a Radio-frequency identification (RFID) tag present in the earmark of the animal. The livestock receiver device may include an alarm to provide an audio/visual indication to the user (e.g., a cowboy) for identification of the animal that corresponds to the animal ID that is selected using the control unit. The control unit may also communicate a note that includes a status of the animal that is identified to the server. In one embodiment, the transmitter unit transmits the note to the server. The server may collect data from the control unit and send the data to the cloud server to save the data.

According to another embodiment, the control unit includes a transmitter to transmit the activation signal.

According to another embodiment, the transmitter unit includes one or more transmitters, in order to extend geographical coverage for transmission. In one embodiment, the transmitter unit includes a master transmitter and a slave transmitter, if the transmitter unit includes one or more transmitters. If one transmitter acts as a master transmitter, the other transmitters act as repeaters type slave transmitters for the transmission. In another embodiment, the transmitter unit is integrated with a user interface for selecting an animal ID to locate an animal. In another embodiment, a control unit may be used to define which transmitter unit is the master transmitter, hence defining the signal contents to be transmitted.

According to another embodiment, the server is a physical computer server, or a cloud server. The server may include a database that stores animal identification information related to animals (e.g., an animal identification, a livestock receiver device identification, and/or other animal related data). The animal identification (i.e. animal ID) may be programmed into the livestock receiver device. In another embodiment, the server receives and transmits animal identification information related to the animals from/to external systems.

According to another embodiment, the control unit provides a user interface to users to provide animal identification information related to animals. The control unit may be a wireless device, a smartphone, or a specifically designed device for the conditions in cattle shed. In another embodiment, the user interface of the control unit is implemented using Hyper Text Markup Language code received from the server.

According to another embodiment, the livestock receiver device is programmed with an animal identification (i.e. animal ID) and is attached to an animal. When the livestock receiver device is activated by itself for the period of time tᵣ, the livestock receiver device listens for the activation signal to be received. If the activation signal is received, the livestock receiver device activates an alarm signal for the period of time tᵣ, or until the livestock receiver device is deactivated. In an embodiment, the livestock receiver device includes at least one of an earmark device, a collar type device, or a belt type device to be attached to an animal.

According to another embodiment, the livestock receiver device reads the animal ID from a Radio-frequency identification (RFID) tag present in an earmark of the animal.

According to another embodiment, the livestock receiver device is battery operated.

According to another embodiment, the transmitter unit, the control unit, and the server are communicatively coupled. In another embodiment, the transmitter unit and the livestock receiver device are communicatively coupled to each other.

According to another embodiment, the activation signal from the transmitter unit is communicated to the livestock receiver device based on the following steps of: (a) configuring the livestock receiver device to sleep for M seconds, (b) activating the livestock receiver device to listen for a period of N milliseconds once the activation signal is transmitted from the transmitter unit, (c) configuring the transmitter unit to transmit the activation signal for M+P seconds, (d) determining whether the activation signal corresponds to the livestock receiver device when the activation signal is received by the livestock receiver device, and (e) activating an alarm signal (e.g., a visual alarm, or a secondary alarm) when the activation signal is received by the livestock receiver device.

In an embodiment, the livestock receiver device sleeps for M seconds until the activation signal is received. The activation signal communication may be operated on an unlicensed radio frequency, such as industrial, scientific and medical (ISM) band. In another embodiment, the activation signal transmission is performed under a power of 500 mW. The maximum transmission power depends on the radio frequency used and is generally defined by market specific regulation.

According to another embodiment, the visual alarm signal is a very short repeated pulse emitted using light emitting diodes. The livestock receiver device may be in a sleep state for most of the time in a day. In one embodiment, the clock speed of the livestock receiver device is lowered down and the unessential components of the livestock receiver device are powered down when the livestock receiver device is in the sleep state. The clock speed of the livestock receiver device may increase when the activation signal is monitored.

In an embodiment, the visual alarm (e.g. a lamp) is a high efficiency light emitting diode implemented on a printed circuit board inside the livestock receiver device. In another embodiment, the visual alarm device is molded inside a housing of the livestock receiver device. The housing of the livestock receiver device may include a transparent plastic. The housing of the livestock receiver device may include a light guide and a lens to effectively conduct a light out and to project a pattern (e.g., a short line). A width of the short line beam is preferably less than 1 degree, and a length is less than 10 degrees, in one embodiment. The short line beam may be visible when projected onto cowshed wall, or ground, or trees, even from a few meters away.

In an embodiment, the livestock receiver device is used with other devices for locating a car from the parking lot, or for alarming/signaling people in noisy environments. In another embodiment, the livestock receiver device is used in conjunction with other devices for identifying, locating, alarming, or for notification purposes.

The present disclosure provides a system and a method for easily locating one or more of the plurality of animals attached with the livestock receiver device by selecting their animal IDs. The livestock receiver device that is battery operated is easy to use, low maintenance, and robust. The battery of the livestock receiver device may withstand being subject to harsh environmental conditions, and have a long lifetime (e.g., several years).

### DETAILED DESCRIPTION OF THE DRAWINGS

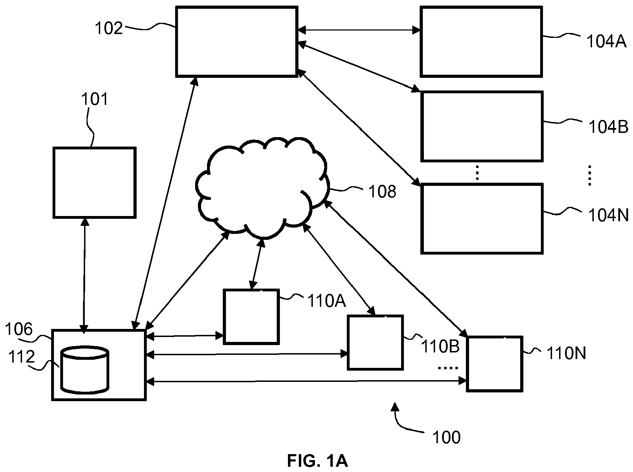

Referring to FIG. 1A, illustrated is a schematic illustration 100 of a transmitter unit 102 activated by a server 106 to transmit activation signals to one or more livestock receiver devices 104A-N for locating one or more animals based on a selection of the animals from a control unit 101, in accordance with an embodiment of the present disclosure. The schematic illustration 100 includes the control unit 101, the transmitter unit 102, the one or more livestock receiver devices 104A-N, a server 106, a cloud server 108, and the one or more user terminals 110A-N. The control unit 101 is communicatively coupled to the server 106.

In an embodiment, the control unit 101 includes a desktop, a mobile phone, a smart phone, a tablet, a personal computer, and an electronic notebook. In another embodiment, the control unit 101 is a purpose-built device for harsh environments. The control unit 101 searches for an object ID from the server 106 to locate an object. In an embodiment, the object includes an animal and the object ID includes an animal ID. In an embodiment, the control unit 101 includes at least one of (i) an application in a computing device, (ii) an application used with a browser of the computing device, and (iii) an application that is in-built in the computing device. The control unit 101 is integrated with a user interface that provides an option to a user (e.g., a cowboy) to select an animal ID from a list of animal IDs to locate an animal. The control unit 101 transmits the animal ID that is selected to the server 106. The server 106 is communicatively coupled to the transmitter unit 102.

The server 106 activates the transmitter unit 102 to send an activation signal for the selected animal ID. The transmitter unit 102 transmits the activation signal that includes the animal ID of an animal to be located. In an embodiment, the transmitter unit 102 is a portable device. In another embodiment, the transmitter unit 102 is integrated with the control unit 101. In another embodiment, the activation signal transmission is operated with Industrial, Scientific, and Medical radio bands. In an embodiment, the control unit 101 includes a transmitter to transmit the activation signal for the selected animal ID. The one or more livestock receiver devices 104A-N is communicatively coupled to the transmitter unit 102. In an embodiment, the one or more livestock receiver devices 104A-N are attached to the animal. The one or more livestock receiver devices 104A-N receives the activation signal and reads an animal ID from a Radio-frequency identification (RFID) tag present in the earmark of the animal. The one or more livestock receiver devices 104A-N includes an alarm to provide an audio/visual indication to the user (e.g., a cowboy) for identification of the animal corresponds to the animal ID that is selected.

The control unit 101 may communicate a note that includes a status of the animal that is identified (e.g., Blueberry 2310 looks sick today) to the server 106. In an embodiment, the note includes a written note, an audio note, a video note, a picture note, or a combination of any of these. The control unit 101 transmits the note to the server 106. The server 106 collects data from the control unit 101 and sends the data to the cloud server 108 to be saved. The server 106 may include a database 112 that stores data/information related to the plurality of animals (e.g., an animal identification, a livestock receiver device identification, and/or other animal related data). In an embodiment, the data includes animal identification related to the plurality of animals (i.e. an animal identification, identification of the one or more livestock receiver devices 104A-N, etc.). The user terminals 110A-N are used to review and change the animal identification information related to the plurality of animals in at least one of (a) the server 106, or (b) the cloud server 108.

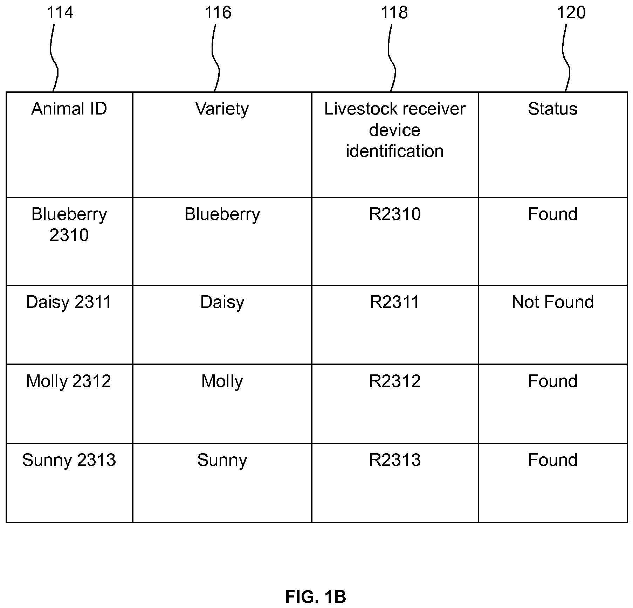

Referring to FIG. 1B, illustrated is an exemplary tabular view of the database 112 in the server 106 of FIG. 1A that illustrates storage of animal identification related to a plurality of animals, in accordance with an embodiment of the present disclosure. The tabular view of the database 112 includes an animal ID field 114, a variety field 116, a livestock receiver device identification field 118, a status field 120. The animal ID field 114 stores an animal ID of the one or more animals (e.g., Blueberry 2310, Daisy 2311, Molly 2312, etc.). The variety field 116 stores a variety of the one or more animals. The livestock receiver device identification field 118 stores a livestock receiver identification number of the one or more livestock receiver devices 104A-N that corresponds to each animal ID. The status field 120 stores a status of the one or more animal. In an embodiment, the status includes whether an animal (e.g., a livestock) corresponds to each animal ID is found or not.

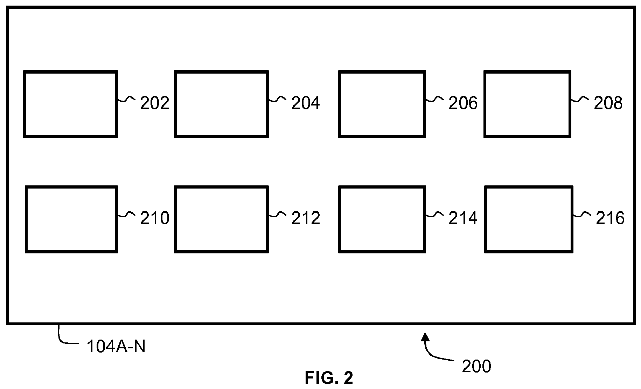

Referring to FIG. 2, illustrated is an exploded view 200 of the one or more livestock receiver devices 104A-N of FIG. 1A, in accordance with an embodiment of the present disclosure. The exploded view includes a radio receiver 202, a microcontroller 204, a visual alarm device 206, a secondary alarm 208, a radio frequency identification (RFID) reader 210, a battery 212, an optional bidirectional communication device 214, and one or more sensors 216. The one or more livestock receiver devices 104A-N reads an animal ID (i.e. an animal identification) from a radio frequency identification (RFID) tag of an earmark attached to an animal, in one embodiment. In an embodiment, the earmark may be an electronic device, such as RFID tag, which can be read from short distance. The one or more livestock receiver devices 104A-N may read a nearest RFID tag and transmit the animal ID corresponds to the nearest RFID tag to the control unit 101, when no other animals is near to the one or more livestock receiver devices 104A-N. The radio receiver 202 in the one or more livestock receiver devices 104A-N receives the activation signal that includes an animal ID of the animal to be located from the transmitter unit 102. The microcontroller 204 processes the activation signal and sends a control signal to activate at least one of (a) the visual alarm device 206, or (b) the secondary alarm 208. In an embodiment, the visual alarm device 206 is a light source.

In an embodiment, the secondary alarm 208 is a speaker. The RFID reader 210 is used to gather information from an RFID tag for tracking objects (e.g., animals). The RFID reader 210 uses radio waves to transfer information from the RFID tag to the RFID reader 210. The battery 212 provides a power supply to the one or more livestock receiver devices 104A-N. In an embodiment, the optional bidirectional communication device 214 includes Bluetooth, or Wi-Fi for longer range communication or for transferring larger amounts of data related to a plurality of animals between the one or more livestock receiver devices 104A-N and the server 106. The one or more sensors 216 that is attached to the animal senses information from the animal, i.e. each livestock receiver device comprises one or more sensors used to sense information for the animal to which the livestock receiver is associated. In an embodiment, the one or more sensors 216 is activated to read a measurement associated with the animal and send the measurement information to the control unit 101. In another embodiment, the one or more sensors 216 includes a biometric sensor, a global positioning system (GPS) sensor, and a motion sensor. In an embodiment, the biometric sensor collects biometric information of the animal and communicates the biometric information to the control unit 101. In another embodiment, the GPS sensor detects a geographical location of the animal. The motion sensor detects a motion/movement of the animal.

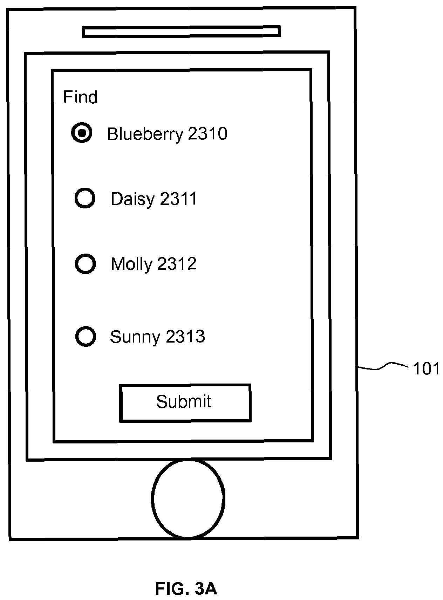

Referring to FIG. 3A, illustrated is an exemplary user interface view of the control unit 101 of FIG. 1A that illustrates selecting an animal ID from a list of animal IDs to locate an animal that corresponds the animal ID, in accordance with an embodiment of the present disclosure. The user interface view of the control unit 101 includes a list of animals IDs. The user interface view provides an option to a user to select an animal ID from the list of animal IDs to locate an animal that corresponds to the animal ID that is selected. Once the user selects an animal ID (e.g., Blueberry 2310) from the list of animal IDs, the control unit 101 transmits the animal ID to the server 106. The server 106 activates the transmitter unit 102 to send an activation signal for the selected animal ID. The transmitter unit 102 transmits the activation signal that includes the animal ID of an animal to be located to the one or more livestock receiver devices 104A-N.

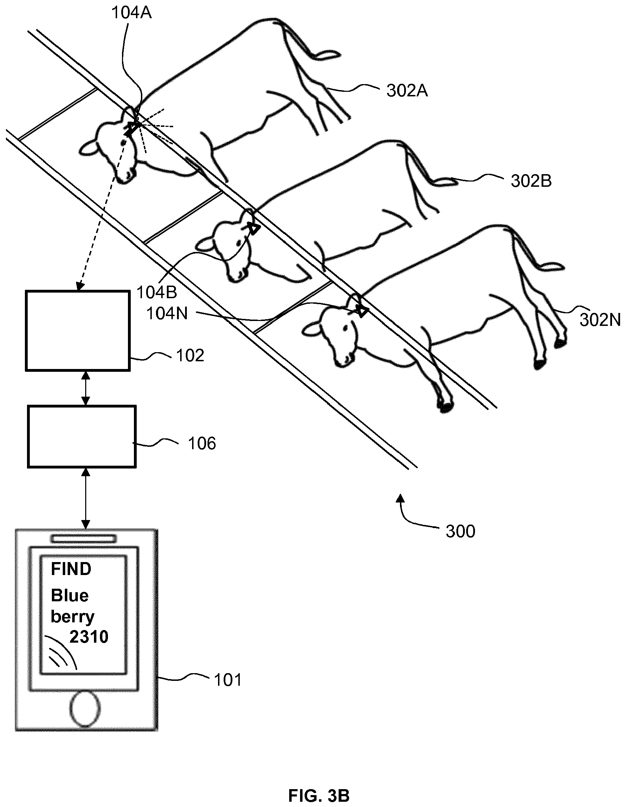

Referring to FIG. 3B, illustrated is an exemplary view 300 of the one or more livestock receiver devices 104A-N of FIG. 1A attached to a plurality of animals 302A-N in a livestock shed, used to locate one or more of the plurality of animals 302A-N using the control unit 101 and the transmitter unit 102, in accordance with an embodiment herein. The exemplary view 300 includes the control unit 101, the transmitter unit 102, the server 106, the one or more livestock receiver devices 104A-N, and the plurality of animals 302A-N. When a user selects an animal ID (e.g., Blueberry 2310) from the list of animal IDs in the user interface of the control unit 101, the control unit 101 transmits the animal ID (i.e. Blueberry 2310) to the server 106. The server 106 activates the transmitter unit 102 to send an activation signal that comprises the selected animal ID. The transmitter unit 102 transmits the activation signal that includes an animal ID Blueberry 2310 to the livestock receiver device 104A. The livestock receiver device 104A receives the activation signal and reads the animal ID from a Radio-frequency identification (RFID) tag present in the earmark of the animal 302A. The livestock receiver device 104A includes an alarm to provide an audio/visual indication to the user (e.g., a cowboy) for identification of the animal 302A corresponds to the Blueberry 2310 animal ID that is selected. Using the control unit 101, the user can easily find the plurality of animals 302A-N attached with the one or more livestock receiver devices 104A-N by selecting their animal IDs at the time of feeding.

In another embodiment the transmitter unit 102 is physically integrated with the control unit 101. When a user selects an animal ID (e.g., Blueberry 2310) from the list of animal IDs in the user interface of the control unit 101, the control unit 101 optionally queries for permission from the server 106 to activate the integrated transmitter unit 102 to send an activation signal that comprises the selected animal ID. In an embodiment, the permission to send is not queried from the server. The said embodiment is applicable for example in small systems, where the only transmitter unit 102 in the system is integrated into the control unit 101.

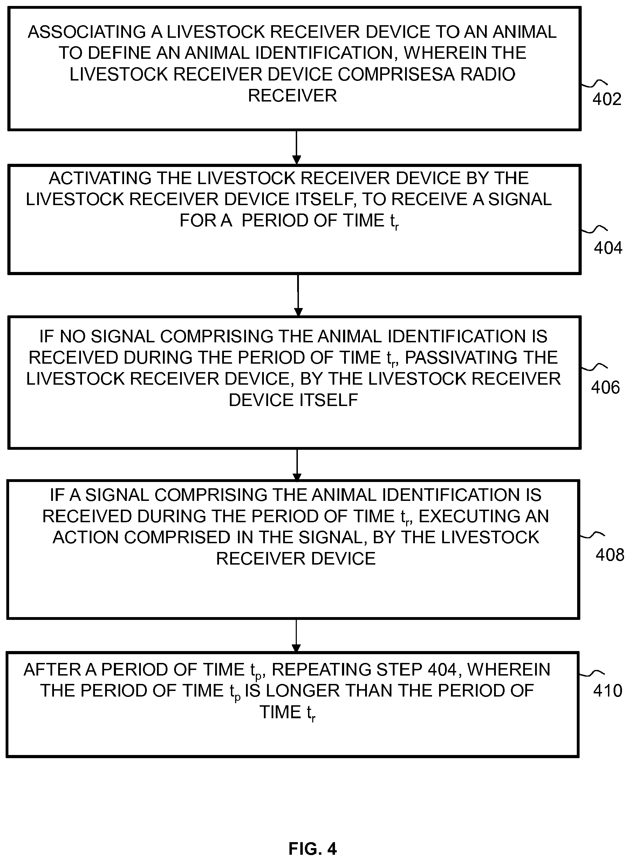

Referring to FIG.4, illustrated is a flow diagram that illustrates a method for locating an animal using the livestock receiver device 104 of FIG. 1A, in accordance with an embodiment herein. At step 402, the livestock receiver device 104 is associated to an animal, wherein the livestock receiver device 104 includes a radio receiver. At step 404, the livestock receiver device 104 is activated by the livestock receiver device 104 itself, to receive a signal for a period of time tᵣ. At steps 405 and 408, if no signal comprising the animal identification is received during the period of time tᵣ, the livestock receiver device 104 is passivated by the livestock receiver device 104 itself. At steps 405 and 406, if a signal comprising the animal identification is received during the period of time tᵣ, the livestock receiver device 104 executes an action comprised in the signal. At step 410, after a period of time tp, the step 404 is repeated. In an embodiment, the period of time tp is longer than the period of time tᵣ.

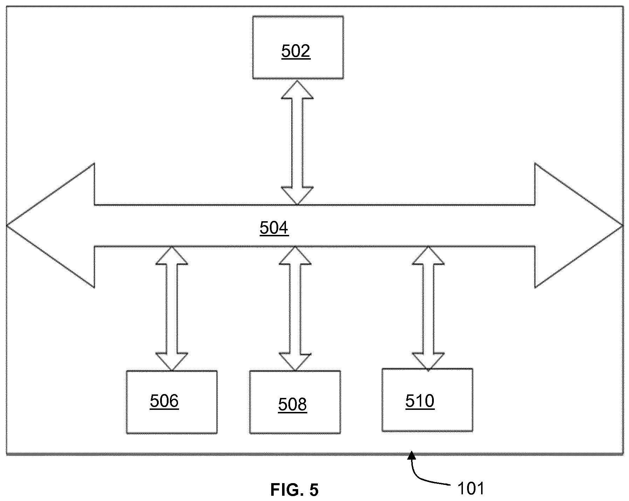

Referring to FIG. 5, illustrated is an exploded view of the control unit 101 of FIG. 1A having a memory 502 having a set of instructions, a bus 504, a display 506, a speaker 508, and a processor 510 capable of processing the set of instructions to perform any one or more of the methodologies herein, according to an embodiment herein. The processor 510 may also enable digital content to be consumed in the form of video for output via one or more displays 506 or audio for output via speaker and/or earphones 508. The processor 510 may also carry out the methods described herein and in accordance with the embodiments herein.

Digital content may also be stored in the memory 502 for future processing or consumption. A user of control unit 101 may view this stored information on the display 506 and select an item of for viewing, listening, or other uses via input, which may take the form of keypad, scroll, or other input device(s) or combinations thereof. The content and stored information may be passed among functions within control unit 101 using the bus 504.

The techniques provided by the embodiments herein may be implemented on an integrated circuit chip (not shown).

In any case the chip is then integrated with other chips, discrete circuit elements, and/or other signal processing devices as part of either (a) an intermediate product, such as a motherboard, or (b) an end product. The end product can be any product that includes integrated circuit chips, ranging from toys and other low-end applications to advanced computer products having a display, a keyboard or other input device, and a central processor.

The embodiments herein can take the form of, an entirely hardware embodiment, an entirely software embodiment or an embodiment including both hardware and software elements. The embodiments that are implemented in software include but are not limited to, firmware, resident software, microcode, etc. Furthermore, the embodiments herein can take the form of a computer program product accessible from a computer-usable or computer-readable medium providing program code for use by or in connection with a computer or any instruction execution system. For the purposes of this description, a computer-usable or computer readable medium can be any apparatus that can comprise, store, communicate, propagate, or transport the program for use by or in connection with the instruction execution system, apparatus, or device.

The medium can be an electronic, magnetic, optical, electromagnetic, infrared, or semiconductor system (or apparatus or device) or a propagation medium. Examples of a computer-readable medium include a semiconductor or solid state memory, magnetic tape, a removable computer diskette, a random access memory (RAM), a read-only memory (ROM), a rigid magnetic disk and an optical disk. Current examples of optical disks include compact disk - read only memory (CD-ROM), compact disk - read/write (CD-R/W) and DVD.

A data processing system suitable for storing and/or executing program code will include at least one processor coupled directly or indirectly to memory elements through a system bus. The memory elements can include local memory employed during actual execution of the program code, bulk storage, and cache memories which provide temporary storage of at least some program code in order to reduce the number of times code must be retrieved from bulk storage during execution.

Input/output (I/O) devices (including but not limited to keyboards, displays, pointing devices, remote controls, etc.) can be coupled to the system either directly or through intervening I/O controllers. Network adapters may also be coupled to the system to enable the data processing system to become coupled to other data processing systems or remote printers or storage devices through intervening private or public networks. Modems, cable modem and Ethernet cards are just a few of the currently available types of network adapters.

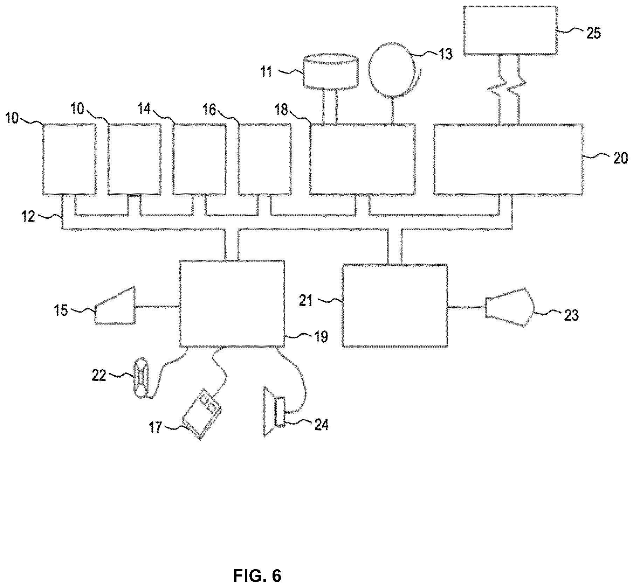

A representative hardware environment for practicing the embodiments herein is depicted in FIG. 6. This schematic drawing illustrates a hardware configuration of a computer architecture/system used to implement the server 106 or the control unit 101 of FIG. 1A in accordance with the embodiments herein. The system comprises at least one processor or central processing unit (CPU) 10. The CPUs 10 are interconnected via system bus 12 to various devices such as a random access memory (RAM) 14, read-only memory (ROM) 16, and an input/output (I/O) adapter 18. The I/O adapter 18 can connect to peripheral devices, such as disk units 11 and tape drives 13, or other program storage devices that are readable by the system. The system can read the inventive instructions on the program storage devices and follow these instructions to execute the methodology of the embodiments herein.

The system further includes a user interface adapter 19 that connects a keyboard 15, mouse 17, speaker 24, microphone 22, and/or other user interface devices such as a touch screen device (not shown) or a remote control to the bus 12 to gather user input. Additionally, a communication adapter 20 connects the bus 12 to a data processing network 25, and a display adapter 21 connects the bus 12 to a display device 23 which may be embodied as an output device such as a monitor, printer, or transmitter, for example.

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural.

## Claims

1. A method for locating an animal using a livestock receiver device (104) attached to the animal, comprising steps of:
(a) associating the livestock receiver device to an animal to define an animal identification, comprising sending a request for the livestock receiver device to read a radio frequency identification tag attached to the animal and to memorise the animal identification contained therein, wherein the livestock receiver device comprises a radio receiver (202);
(b) activating the livestock receiver device by the livestock receiver device itself, to receive a signal for a period of time tᵣ,
(i) if no signal comprising the animal identification is received during the period of time tᵣ, passivating the livestock receiver device, by the livestock receiver device itself; and
(ii) if a signal comprising the animal identification is received during the period of time tᵣ, executing an action comprised in the signal, by the livestock receiver device; and
(c) after a period of time tp, repeating the step (b), wherein the period of time tp is longer than the period of time tᵣ.

2. A method according to claim 1, wherein the period of time tᵣ is from 1 to 50 milliseconds.

3. A method according to any of the preceding claims, wherein the period of time tp is from 2 to 30 seconds.

4. A method according to any of the preceding claims, wherein the action to be activated comprises at least one of activating an illuminator, activating a sound source, activating a sensor including reading a measurement and sending the measurement data.

5. A system for locating an animal using a livestock receiver device (104) attached to the animal, comprising:
a server (106) comprising a database (112);
a control unit (101);
a transmitter unit (102); and
at least two livestock receiver devices, each comprising:
a radio receiver (202);
an alarm (206, 208); and
a battery (212),
wherein at least one of the livestock receiver device comprises a sensor (216), a radio frequency identification reader (210) and a radio transmitter (214).

6. A system according to claim 5, wherein the alarm is an illuminator or a speaker.

7. A system according to any of the claims 5-6, wherein the illuminator comprises a light source and a light guide configured as a lens.

8. A system according to any of the claims 5-6, wherein the livestock receiver device is a collar or an ear tag.
